# EUROPÄISCHE PATENTSCHRIFT

(11) **EP 2 116 403 B1**
(45) Veröffentlichungstag und Bekanntmachung des Hinweises auf die Patenterteilung: **18.01.2012**
(21) Anmeldenummer: 09169057.8
(22) Anmeldetag: 01.04.2005
(51) Int. Cl.: B60G 17/04, B60G 15/12, F16F 9/06, F16F 9/08

(54) **Federungs- und Dämpfungseinrichtung für Kraftfahrzeuge**
Suspension and damping device for motor vehicles
Dispositif de suspension et d'amortissement pour véhicules motorisés

(30) Priorität: 08.04.2004 DE 202004005623 U
(43) Veröffentlichungstag der Anmeldung: 11.11.2009
(62) Teilanmeldung aus: 05102596.3
(73) Patentinhaber: HEMSCHEIDT FAHRWERKTECHNIK GmbH & Co. KG, 42781 Haan-Gruiten (DE)
(72) Erfinder: Runkel, Walter, 53547 Leubsdorf (DE)
(74) Vertreter: Patentanwälte Dr. Solf & Zapf

(56) Entgegenhaltungen:
- EP-A- 0 529 320
- EP-A- 1 231 085
- WO-A-03/106202
- DE-C1- 3 902 743
- US-A- 3 677 141
- US-A- 5 246 247
- US-A- 5 413 030
- PATENT ABSTRACTS OF JAPAN Bd. 011, Nr. 258 (M-618), 21. August 1987 (1987-08-21) & JP 62 064603 A (SHOWA SEISAKUSHO:KK), 23. März 1987 (1987-03-23)

## Beschreibung

Die vorliegende Erfindung betrifft eine Federungs- und Dämpfungseinrichtung gemäß dem Oberbegriff des unabhängigen Patentanspruchs 1.

Das Dokument US-A-5 246 247 zeigt in den Figuren 5, 6 und 10 eine solche Federungs- und Dämpfungseinrichtung, und zwar in einer speziellen Ausführung als hydropneumatisches Federungssystem. Dabei ist der Federzylinder als Teleskopzylinder, oftmals auch "Federbein" genannt, ausgebildet, der direkt zwischen Rad bzw. Radschwinge und Fahrzeugrahmen montiert wird. Bei dieser bekannten hydropneumatischen Ausführung wirken die beiden über den Kolben getrennten Arbeitsräume des Zylinders hydraulisch gegen jeweils ein pneumatisches Federmedium in jeweils einem zugehörigen hydropneumatischen Federspeicher. Dadurch wird der Kolben beidseitig mit je einer Federkraft beaufschlagt, wobei sich die effektive Tragfederkraft des Federrylinders aus der Differenz der beiden entgegengesetzten Federkräfte ergibt. Zudem ist in jedem der beiden hydraulischen Federkreisläufe ein Dämpfungsventil angeordnet. Durch die Dämpfung (Drosselung) wird das Hydraulikmedium aber rasch und zum Teil stark erwärmt. Diese Erwärmung wirkt sich auch auf das kompressible, insbesondere pneumatische Medium aus, indem dessen Druck und damit auch die Tragfederkraft ansteigen. Daraus resultieren ungünstige, stark variierende Federungs- und Dämpfungseigenschaften.

Auch das Dokument DE 39 02 743 C1 offenbart eine ähnliche Einrichtung mit einem "Federbein", wobei es sich aber um ein aktives Rad- bzw. Achsabstützaggregat handelt. Auch hierbei sind die zwei über den Kolben getrennten Arbeitsräume des Zylinders mit jeweils einem hydropneumatischen Druckspeicher verbunden, wobei in beiden Leitungen Drosselanordnungen angeordnet sein können. Dieses bekannte Abstützaggregat kann wahlweise aktiv oder auch passiv arbeiten. Für den aktiven Betrieb ist eine Steuer- bzw. Regelventilanordnung vorgesehen, über die die Arbeitsräume wechselseitig mit hydraulischem Druck beaufschlagt werden können.

Das Dokument EP-A-1 231 085 zeigt in Figur 3 einen hydropneumatischen Zylinder mit einem integrierten hydropneumatischen Federspeicher. Dazu ist die Kolbenstange hohl als innerer Zylinder ausgebildet, in dem ein Trennkolben frei verschiebbar geführt ist. Der Trennkolben trennt innerhalb des durch die hohle Kolbenstange gebildeten inneren Zylinders ein Gasvolumen von Hydrauliköl. Der mit der Kolbenstange verbundene, in einem äußeren Zylinder geführte Kolben weist eine Dämpfungsöffnung auf, über die beim Einfedem Hydrauliköl aus dem Zylinderraum in die hohle Kolbenstange gelangt und dort über den Trennkolben gegen das Gas wirkt.

Die WO 03/106202 A1 beschreibt eine andere Federungseirichtung, wobei in einigen Ausführungen - entsprechend dem Merkmalskomplex des Anspruchs 3 - eine Dämpfungseinrichtung einen separaten, von dem Federzylinder und dem Federmedium unabhängigen Kreislauf eines hydraulischen Dämpfungsmediums aufweist. Dazu ist mindestens ein separater Dämpfungszylinder mit einem in einem Zylinder relativbeweglich geführten Dämpferkolben sowie mindestens ein hydraulisch mit dem Dämpfer-zylinder verbundenes Dämpfungsventil erforderlich. Der Kolben des Federzylinders wird über eine von einem Zahnradgetriebe gebildete Antriebseinrichtung angetrieben, die die Schwenkbewegungen eines Rad-Schwingentragarms in die linearen Relativbewegungen zwischen Zylinder und Kolben des Federzylinders umsetzt. Dabei soll die Dämpfungseinrichtung mit der gleichen Antriebseinrichtung wie auch der Federzylinder zusammenwirken, wobei aber die Medien (Feder- und Dämpfungsmedium) vollständig voneinander getrennt sind. Hintergrund ist, dass dadurch keine thermische Abhängigkeit besteht, wodurch dämpfungsbedingte Erwärmungen des Dämpfungsmediums insofern unkritisch sind, als davon die Temperatur des Federmediums und somit auch der Druck und die druckabhängige Tragfederkraft unbeeinflusst bleiben. Im Gegensatz dazu würde eine Erwärmung des Federmediums auch eine Änderung des Druckes und damit der Tragfederkraft bewirken. Die bekannte Federungs- und Dämpfungseinrichtung hat allerdings einen relativ aufwändigen Aufbau, was sich auch durch ein relativ großes Einbauvolumen und Gewicht bemerkbar macht.

Der vorliegenden Erfindung liegt die Aufgabe zugrunde, eine Federungs- und Dämpfungseinrichtung der eingangs beschriebenen, gattungsgemäßen Art zu schaffen, die sich bei besonders kompakter und leichter Bauform durch optimale Federungs- und Dämpfungseigenschaften auszeichnet.

Erfindungsgemäß wird dies durch die Merkmale des Anspruchs 1 erreicht. Vorteilhafte Ausgestaltungsmerkmale der Erfindung sind in den Unteransprüchen sowie auch in der anschließenden Beschreibung enthalten.

Demnach ist vorgesehen, dass der Kolben innerhalb des Zylinders zwei Arbeitsräume voneinander trennt, wobei der erste Arbeitsraum dem Federmedium und der zweite Arbeitsraum dem Dämpfungsmedium zugeordnet sind. Bei dem erfindungsgemäßen Federzylinder handelt es sich somit grundsätzlich um eine Art Federbein im herkömmlichen Sinne, wobei aber ein hydraulischer Dämpfungskreislauf von dem Federmedium über den Oben getrennt ist. Dabei ist der zweite Arbeitsraum über eine Dämpfungsventilanordnung hydraulisch mit einem Hydraulikbehälter verbunden, in dem das Dämpfungsmedium unter einem bestimmten Vorspanndruck von beispielsweise 3 bis 5 bar steht Dadurch wird beim Einfedern des Federzylinders der Fluss des Dämpfungsmediums in den zweiten Arbeitsraum hinein unterstützt (beschleunigt). Der erste Arbeitsraum ist mit dem elastisch kompressiblen Federmedium gefüllt, so dass der kolben erfindungsgemäß unmittelbar gegen das Federmedium wirkt und folglich das Federmedium im ersten Arbeitsraum von dem hydraulischen Dämpfungsmedium im zweiten Arbeitsraum trennt.

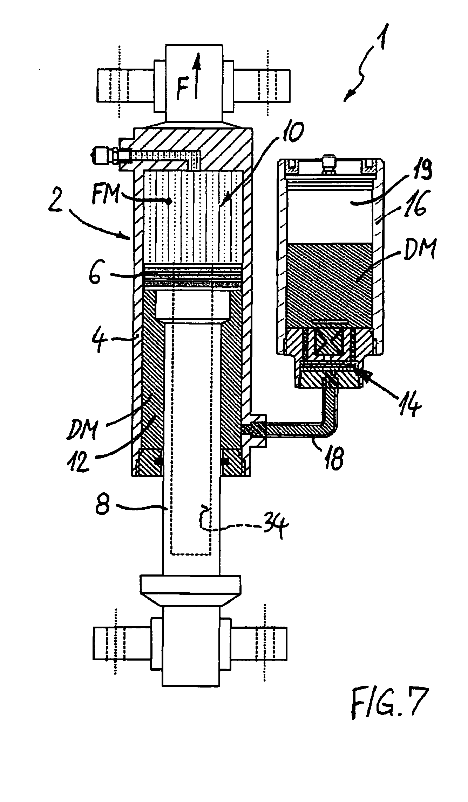

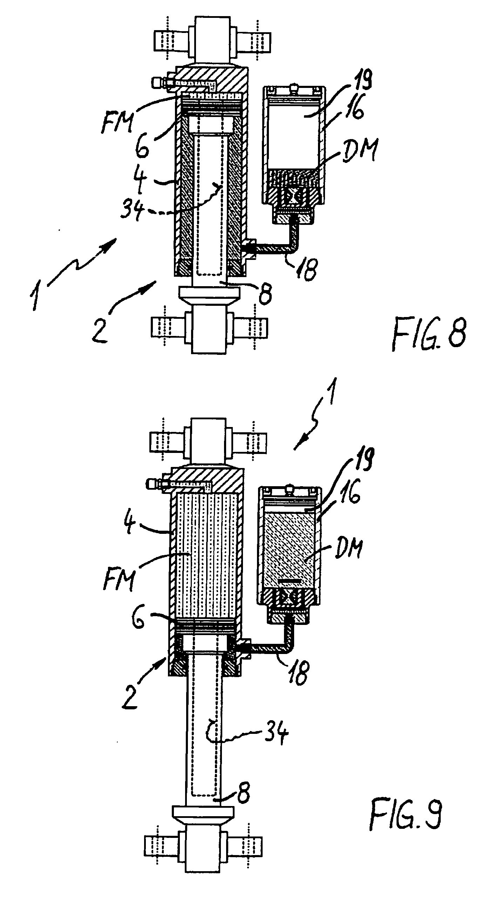

Anhand von mehreren, in der Zeichnung veranschaulichten Ausführungsbeispielen soll die Erfindung im Folgenden genauer erläutert werden, wobei nur die Ausführungen gemäß Fig.7 bis 10 der Erfindung gemäß Anspruch 1 entsprechen. Dabei zeigen jeweils in schematischen, teilweise axial geschnittenen Prinzipdarstellungen:
- Fig. 1: eine erste nicht erfindungsgemäße Ausführungsform einer Federungs- und Dämpfungseinrichtung,
- Fig. 2: eine verkleinerte Ansicht der Einrichtung gemäß Fig. 1 in einem eingefederten Zustand,
- Fig. 3: eine Ansicht analog zu Fig. 2 im ausgefederten Zustand,
- Fig. 4: eine zweite, ebenfalls nicht erfindungsgemäße Ausführungsform der Einrichtung in einer Darstellung analog zu Fig. 1,
- Fig. 5 und 6: Darstellungen der Ausführung gemäß Fig. 4 analog zu Fig. 2 und 3,
- Fig. 7 bis 9: Darstellungen analog zu Fig. 1 bis 3 bzw. Fig. 4 bis 6 einer erfindungsgemäßen Ausführungsform,
- Fig. 10: eine weitere Ausführungsform der Erfindung und
- Fig. 11: eine Ausgestaltung am Beispiel der Ausführung gemäß Fig. 4 bis 6.

In den verschiedenen Figuren der Zeichnung sind gleiche bzw. sich funktionell entsprechende Teile und Komponenten stets mit den gleichen Bezugszeichen versehen. Daher gilt jede Beschreibung eines Teils, die auf eine oder mehrere bestimmte Zeichnungsfiguren Bezug nimmt, analog auch bezüglich der anderen Zeichnungsfiguren, in denen das Teil mit dem entsprechenden Bezugszeichen ebenfalls zu erkennen ist

Eine Federungs- und Dämpfungseinrichtung 1 besteht in allen Ausführungsbeispielen aus (mindestens) einem Federzylinder 2, der zur direkten Anordnung zwischen einem Fahrzeugrad bzw. einem Rad-Schwingentragarm und einem Fahrzeugrahmen (beides nicht dargestellt) vorgesehen ist. Der Federzylinder 2 besteht teleskapartig aus einem Zylinder 4 und einem darin linear verschiebbar geführten Kolben 6 mit einer Kolbenstange 8, die umfangsgemäß abgedichtet aus dem Zylinder 4 herausgeführt ist.

Zur Erzeugung einer lasttragenden Tragfederkraft F wirkt der Kolben 6 erfindungsgemäß unmittelbar (Fig. 7 bis 10) gegen ein elastisch kompressibles Federmedium FM. Zum Dämpfen von Federungsbewegungen ist ein separater, von dem Federmedium FM unabhängiger Kreislauf eines hydraulischen Dämpfungsmediums DM vorgesehen.

Der Kolben 6 liegt Ober mindestens eine ringförmige Kolbendichtung an der Innenfläche des Zylinders 4 an. Dadurch trennt der Kolben 6 innerhalb des Zylinders 4 zwei Arbeitsräume voneinander, wobei ein erster Arbeitsraum 10 dem Federmedium FM und ein zweiter Arbeitsraum 12 dem Dämpfungsmedium DM zugeordnet sind. Folglich trennt der Kolben 6 erfindungsgemäß auch einen "Federkreislauf" von einem "Dämpfungskreislauf.

Bei den dargestellten Ausführungsbeispielen ist der Federzylinder 2 als Druckzylinder ausgeführt. Dies bedeutet, dass er praktisch als Druckfeder wirkt, um die jeweilige Last abzustützten. Dazu ist der dem Federmedium FM zugeordnete erste Arbeitsraum 10 als zylindrischer Raum auf der der Kolbenstange 8 gegenüberliegenden Seite des Kolbens 6 gebildet. Der zweite Arbeitsraum 12 umschließt ringförmig bzw. hohlzylindrisch die Kolbenstange 8. Da der zweite Arbeitsraum 12 erfindungsgemäß dem Dämpfungsmedium DM zugeordnet ist, wirkt bei dieser Ausgestaltung die Kolbenstange 8 vorteilhafterweise als Kühlelement zur Kühlung des sich bei Dämpfung bzw. Drosselung erwärmenden Dämpfungsmediums DM.

Der zweite Arbeitsraum 12 ist über eine Dämpfungsventilanordnung 14 mit einem Hydraulikbehälter 16 verbunden. Bevorzugt ist die Dämpfungsventilanordnung 14 in einem Einlassbereich des Hydraulikbehäfters 16 integriert angeordnet. Der Hydraulikbehälter 16 ist bevorzugt als gesondertes Bauteil extem, getrennt von dem Federzylinder 2 angeordnet und über eine Leitung 18 mit dem zweiten Arbeitsraum 12 des Federzylinders 2 verbunden. Indem die Dämpfungsventilanordnung 14 integriert im EinlassbereiCh des Hydraulikbehälters 16 angeordnet ist, entsteht eine dämpfungs- bzw. drosselbedingte Erwärmung des Dämpfungsmediums DM vorteilhafterweise in einem entfernt von dem Federzylinder 2 und damit auch entfernt von dem Federmedium FM liegenden Bereich. Zudem wird durch den externen Hydraulikbehälter 16 vorteilhafterweise auch eine zusätzliche Kühlwirkung zur Kühlung des Dämpfungsmediums DM erreicht, indem Wärme Ober eine große Außenfläche (Kühlfläche) an die Umgebung abgegeben wird. Zwar kann ein Wärrneanteil über das Dämpfungsmedium DM auch in den zweiten Arbeitsraum 12 gelangen, jedoch wirkt, wie oben bereits angedeutet wurde, die Kolbenstange 8 als Kühlelement, indem sie von dem Dämpfungsmedium DM umschlossen ist und dadurch dessen Wärme nach außen transportiert. Dies ist besonders effektiv, weil sich die Kolbenstange bei den Federungsbewegungen ja teilweise auch nach außen aus dem Zylinder 4 bewegt und jegliche Wärme dort an die Umgebung abgeben kann. Es kann davon gesprochen werden, dass die Kolbenstange 8 eine Art .Wärmepumpe" bildet. Zusätzlich wird Wärme auch über die Außenfläche des Zylinders 4 an die Umgebung abgegeben. Es werden somit durch die erfindungsgemäße Anordnung insgesamt sehr große Kühlflächen zur effektiven Kühlung des Dämpfungsmediums DM genutzt, so dass ein Wärmeübergang über den Kolben 6 auf das Federmedium vorteilhafterweise allenfalls minimal ist.

Es kommt noch hinzu, dass bei den bevorzugten Ausführungen eine Dämpfung nur im halben Federungszyklus erfolgt, und zwar durch eine entsprechende Ausgestaltung der Dämpfungsventilanordnung 14 (mit Drossel- und Rückschlagventilen) nur beim Ausfedern, während Einfederungsbewegungen nahezu ungedämpft sind, so dass Wärme eigentlich nur beim Ausfedern entsteht. Der Einfederungshub kann zur Kühlung genutzt werden. Beim Einfedem kann auf eine hydraulische Dämpfung verzichtet werden, weil dann das Federmedium FM durch eine ansteigende Federkennlinie quasi dämpfend wirkt.

Der Hydraulikbehälter 16 wird vorzugsweise in einem Fahrzeug so angeordnet, dass er etwa parallel neben dem Federzylinder 2 angeordnet ist, und zwar so, dass das Dämpfungsmedium DM schwerkraftbedingt sich im unteren Bereich befindet In einem Raum 19 oberhalb des Dämpfungsmediums DM kann Luft angeordnet sein. Erfindungsgemäß ist vorgesehen, diesen Raum 19 oberhalb des Dämpfungsmediums DM unter einen bestimmten Vorspanndruck von z. B, 3 bis 5 bar zu setzen, um beim Einfedem den Fluss in den zweiten Arbeitsraum hinein zu unterstützen (zu beschleunigen).

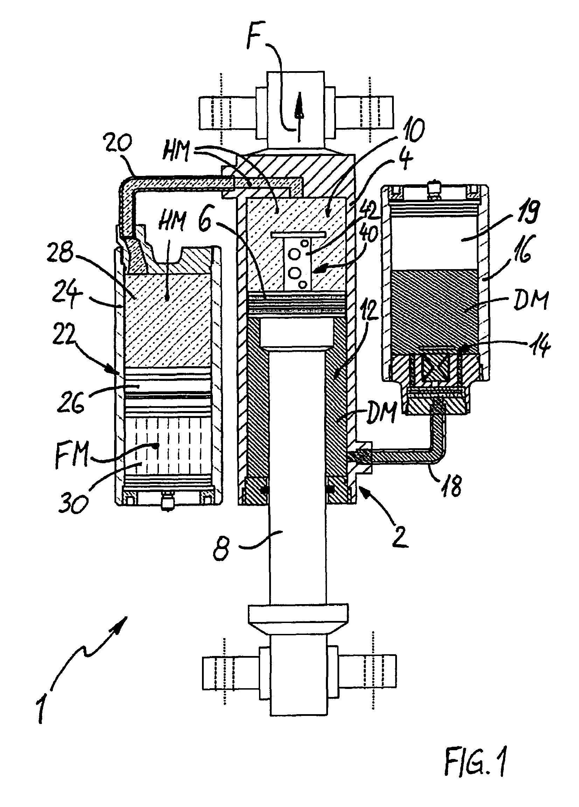

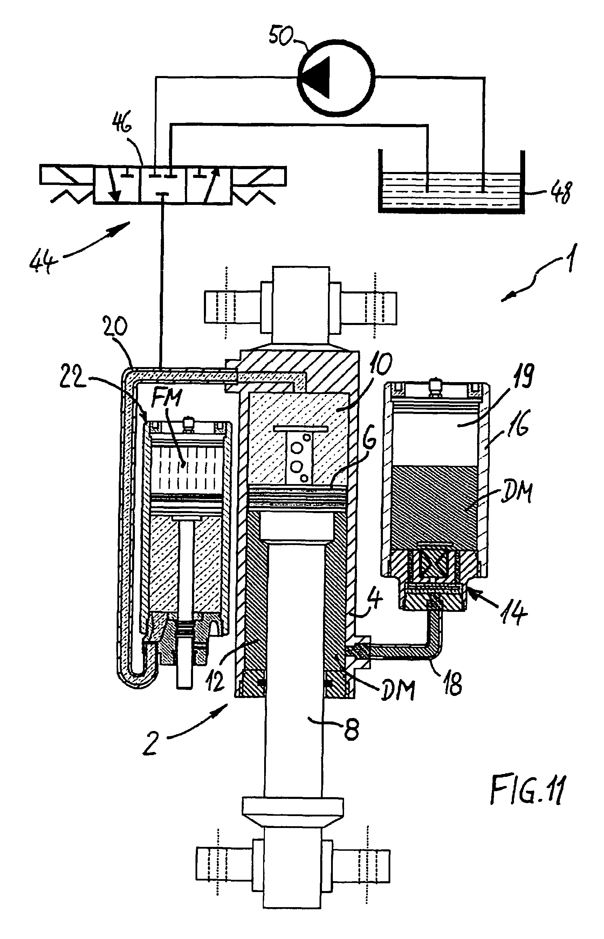

In den nicht erfindungsgemäßen Ausführungsformen gemäß Fig. 1 bis 6 und auch gemäß Fig. 11 ist der erste Arbeitsraum 1β über eine Leitung 20 mit einem das elastisch kompressible Federmedium FM enthaltenden Federspeicher 22 verbunden. Dieser Federspeicher 22 ist bevorzugt als hydropneumatischer Kolbenspeicher mit einem in einem Speicherzylinder 24 frei (schwimmend) beweglichen Trennkolben 26 ausgebildet. Der Trennkolben 26 liegt über mindestens einen Dichtring dichtend an der Innenfläche des Speicherzylinders 24 an und trennt dadurch einen hydraulisch über die Leitung 20 mit dem ersten Arbeitsraum 10 verbundenen Speicherraum 28 von einer das Federmedium FM enthaltenden Federkammer 30, wobei der erste Arbeitsraum 10 und der Speicherraum 28 hierbei vollständig mit einem Hydraulikmedium HM gefüllt sind. Somit wirkt hierbei der Kolben 6 des Federzylinders 2 mittelbar über das Hydraulikmedium HM und über den Trennkolben 26 gegen das Federmedium FM innerhalb der Federkammer 30.

Beim Einfedem wird von dem Kolben 6 ein bestimmtes Volumen des Hydraulikmediums HM in den Speicherraum 28 verdrängt, wodurch der Trennkolben 26 gegen das Federmedium FM in Richtung der Federkammer 30 verschoben wird. Durch die daraus resultierende Volumenverminderung erhöht sich der Druck des Federmediums FM und damit auch die Tragkraft F.

Bei der Ausführung gemäß Fig. 1 bis 3 ist der Trennkolben 26 als Trennwand vollständig innerhalb des Speicherzylinders 24 angeordnet. Dadurch muss er eine relativ große axiale Länge aufweisen, um zu vermeiden, dass er innerhalb des Speicherzylinders 24 kippt und dadurch klemmt (so genannter "Schubladeneffekt").

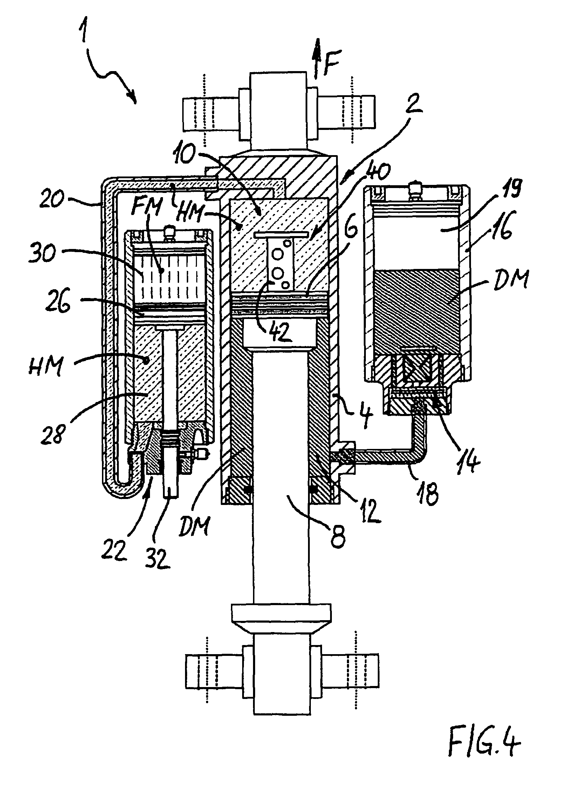

Bei der Ausführung gemäß Fig. 4 bis 6 ist demgegenüber vorgesehen, dass der Trennkolben 26 eine sich axial durch den Speicherraum 28 hindurch erstreckende und abgedichtet aus dem Speicherzylinder 24 nach außen geführte Trennkolbenstange 32 aufweist. Durch die Trennkolbenstange 32 wird einerseits eine zusätzliche Führung des Trennkolbens 26 gegen Verkippen erreicht, so dass der Trennkolben 26 selbst mit kürzerer axialer Länge ausgeführt sein kann. Dadurch kann insgesamt Baulänge des Federspeichers 22 eingespart werden. Andererseits wirkt der Federspeicher 22 in dieser Ausführung aufgrund der Trennkolbenstange 32 auch als Druckwandler derart, dass der Druck des Federmediums FM stets kleiner als der Druck des Hydraulikmediums HM ist Dies liegt daran, dass die jeweils mit Druck beaufschlagten gegenüberliegenden Flächen des Trennkolbens 26 unterschiedlich groß sind. Auf der Seite der Federkammer 30 wird eine größere Oberfläche von dem Federmedium FM beaufschlagt, so dass für ein statisches Gleichgewicht des Trennkolbens 26 ein geringerer Druck des Federmediums FM ausreicht. Mit anderen Worten muss der gegenüberliegende Druck des Hydraulikmediums HM wegen der die Trennkolbenstange 32 umschließenden kleineren Ringfläche des Trennkolbens 26 größer sein, um den Trennkolben 26 im Gleichgewicht zu halten.

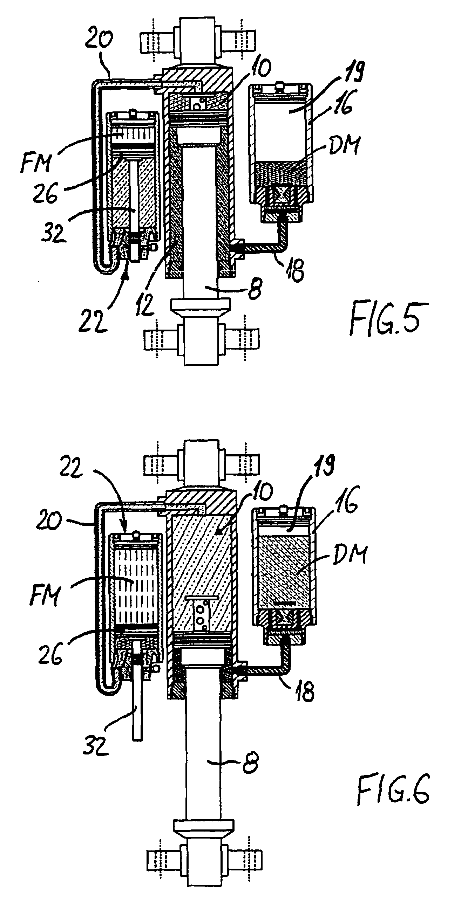

Wie weiter in Fig. 4 bis 6 und auch in Fig. 11 dargestellt ist, ist der Federspeicher 22 parallel neben dem Federzylinder 2 angeordnet, und zwar insbesondere in einer Ausrichtung, in der die Kolbenstange 8 des Federzylinders 2 und die Trennkolbenstange 32 des Federspeichers 22 mit jeweils gleichläufigen Bewegungsrichtungen in die gleiche Richtung weisen. Wie sich aus den Darstellungen in Fig. 5 und 6 ergibt, bewegt sich die Trennkolbenstange 32 aus dem Federspeicher 22 heraus, wenn auch der Federzylinder 2 ausfedert, d. h. wenn die Kolbenstange 8 sich ebenfalls aus dem Zylinder 4 herausbewegt. Hierdurch werden Kollisionsprobleme mit anderen Fahrzeug-Bauteilen bei den Fahrzeug-Federungsbewegungen vermieden.

Bei der erfindungsgemäßen Ausführung gemäß Fig. 7 bis 9 ist der erste Arbeitsraum 10 des Federzylinders 2 direkt mit dem elastisch kompressiblen Federmedium FM gefüllt, so dass der Kolben 6 unmittelbar gegen das Federmedium FM wirkt. Dadurch erübrigt sich ein zusätzlicher, externer Federspeicher 22. Daraus resultiert eine besonders kompakte und leichtgewichtige Bauform der Federungs- und Dämpfungseinrichtung 1, Da sich das kompressible Federmedium FM aber nicht beliebig, und insbesondere nicht bis auf ein Nullvolumen komprimieren lässt, ist bei dieser Ausführung ein Mindest-Restvolumen durch einen Hohlraum 34 innerhalb des Kolbens 6 und der Kolbenstange 8 gebildet.

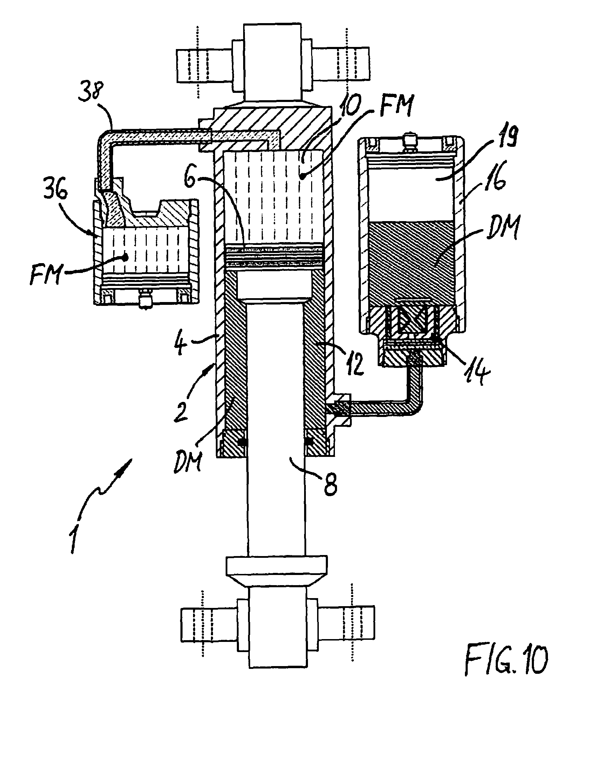

Alternativ oder aber zusätzlich zu dem Hohlraum 34 kann gemäß Fig. 10 ein externer Zusatzbehälter 36 über eine Leitung 38 mit dem ersten Arbeitsraum 10 verbunden sein. Auch bei dieser Ausführung ist erfindungsgemäß direkt in dem ersten Arbeitsraum 10 das elastische Federmedium FM angeordnet.

Als kompressibles Federmedium FM kann insbesondere ein gasförmiges Medium verwendet werden, beispielsweise Stickstoff. Alternativ ist auch ein beliebiges anderes, beispielsweise liquides oder pastöses (hochviskoses) Medium geeignet. Als Dämpfungsmedium DM und/oder Hydraulikmedium HM kann ein übliches, insbesondere niederviskoses Hydrauliköl verwendet werden.

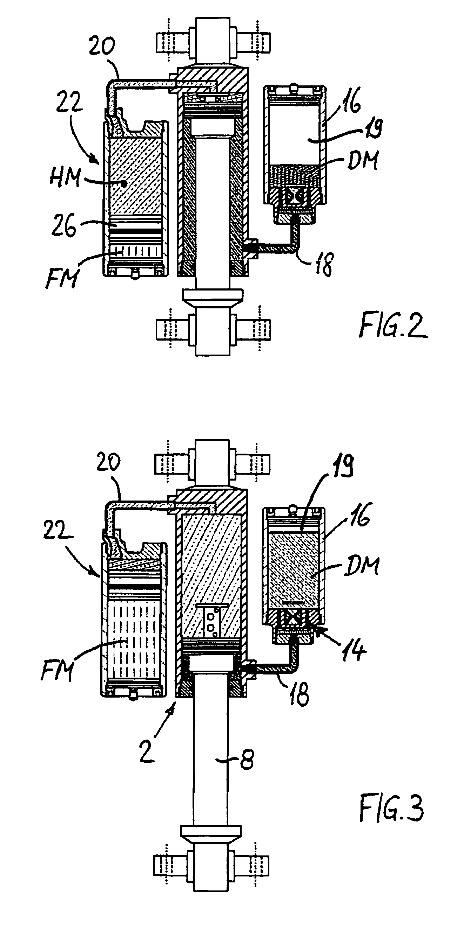

Wie sich noch aus Fig. 1 bis 6 ergibt, ist der Federzylinder 2 mit einer Einrichtung zur hydraulischen Endlagendämpfung ausgestattet. Diese Endlagendämpfung ist in Fig. 1 und 4 jeweils mit der Bezugsziffer 40 bezeichnet. Diese Endlagendämpfung 40 wirkt bevorzugt in Einfederungsrichtung derart, dass eine Abbremsung der Federungsbewegungen jeweils gegen Ende des Einfederungshubes vor Erreichen eines mechanischen Endanschlages gewährleistet ist. Konkret handelt es sich um eine wegabhängige hydraulische Drasseleinrichtung mit einem teleskopartig in den Kolben 6 verschiebbaren Stößel 42, der einen axialen Strömungskanal aufweist, in den mehrere radiale, über die Länge verteilt angeordnete Queröffnungen münden. Durch das Eintauchen des Stößels 42 in den Kolben 6 werden bei Bewegung bis in die Endanschlagstellung die Queröffnungen sukzessive nacheinander verschlossen, Dadurch wird der Strömungswiderstand sukzessive vergrößert, well das Hydraulikmedium HM bei mechanischer Anlage des Stößels 42 im Bereich einer Ausströmöffnung des Zylinders 4 (siehe hierzu die Stellungen in Fig. 2 und 5) nur über die Queröffnungen und den axialen Kanal des Stößels 42 ausströmen kann. Dadurch wird die jeweilige Bewegung sanft abgebremst; ein harter Endanschlag wird vorteilhafterweise vermieden.

In Fig. 11 ist schließlich noch eine hydraulische Nivelliereinrichtung 44 veranschaulicht, die derart ausgebildet ist, dass ein statisches Fahrzeugniveau durch Zuführen oder Ablassen von Hydraulikmedium HM in den oder aus dem Federkreislauf veränderbar ist. Dazu besteht die Nivelliereinrichtung 44 aus einem Schaltventil 46, einem Tank 48 und einer Pumpe 50. Das Schaltventil 46 ist als 3/3-Wegeventil ausgeführt und in der dargestellten Stellung geschlossen. In einer ersten Schaltstellung lässt sich die Pumpe 50 mit dem Federungskreislauf verbinden, um Hydraulikmedium zuzuführen und dadurch das Niveau anzuheben. In einer zweiten Schaltstellung wird der Federungskreislauf mit dem Tank 48 verbunden, um zur Niveau-Absenkung Hydraulikmedium abzulassen.

## Patentansprüche

1. Federungs- und Dämpfungseinrichtung (1) zur lasttragenden und federnden Rad-Abstützung und zum Dämpfen von Federungsbewegungen in einem Kraftfahrzeug, bestehend aus mindestens einem Federzylinder (2) mit einem in einem Zylinder (4) relativbeweglich geführten Kolben (6), der zur Erzeugung einer lasttragenden Tragfederkraft (F) gegen ein elastisch kompressibles Federmedium (FM) wirkt, wobei der Kolben (6) einseitig eine umfangsgemäß abgedichtet aus dem Zylinder (4) nach außen geführte Kalbenstange (8) aufweist, und wobei der Kolben (6) innerhalb des Zylinders (4) zwei Arbeitsräume (10, 12) voneinander trennt, und zwar einen als zylindrischer Raum auf der der Kolbenstange (8) gegenüberliegenden Seite angeordneten ersten Arbeitsraum (10) von einem als Ringraum die Kolbenstange (8) hohlzylindrisch umschließenden zweiten Arbeitsraum (12),
**dadurch gekennzeichnet, dass** zum Dämpfen ein separater, von dem Federmedium (FM) unabhängiger Kreislauf eines hydraulischen Dämpfungsmediums (DM) vorgesehen ist, indem der zylindrische erste Arbeitsraum (10) dem Federmedium (FM) und der hohlzylindrische zweite Arbeitsraum (12) dem Dämpfungsmedium (DM) zugeordnet sind, wobei der zweite Arbeitsraum (12) mit dem hydraulischen Dämpfungsmedium (DM) gefüllt und über eine Dämpfungsventilanordnung (14) mit einem Hydraulikbehälter (16) verbunden ist, in dem das Dämpfungsmedium (DM) unter einem bestimmten Vorspanndruck steht, und wobei der erste Arbeitsraum (10) mit dem elastisch kompressiblen Federmedium (FM) gefüllt ist, so dass der Kolben (6) unmittelbar gegen das Federmedium (FM) wirkt.

2. Federungs- und Dämpfungseinrichtung nach Anspruch 1,
**dadurch gekennzeichnet, dass** der Vorspanndruck in dem Hydraulikbehälter (16) im Bereich von 3 bis 5 bar liegt.

3. Federungs- und Dämpfungseinrichtung nach Anspruch 1 oder 2,
**dadurch gekennzeichnet, dass** der erste Arbeitsraum (10) über eine Leitung (3B) mit einem das elastisch kompressible Federmedium (FM) enthaltenden Zusatzbehälter (36) verbunden ist.

4. Federungs- und Dämpfungseinrichtung nach einem der Ansprüche 1 bis 3,
**dadurch gekennzeichnet, dass** der Kolben (6) einen Hohlraum (34) zur Bildung eines Mindest-Restvolumens für das Federmedium (FM) aufweist.

5. Federungs- und Dämpfungseinrichtung nach einem der Ansprüche 1 bis 4,
**dadurch gekennzeichnet, dass** als kompressibles Federmedium (FM) ein gasförmiges und/oder liquides Medium vorgesehen ist.

6. Federungs- und Dämpfungseinrichtung nach einem der Ansprüche 1 bis 5,
**dadurch gekennzeichnet, dass** die Dämpfungsventilanordnung (14) in einem Einlassbereich des Hydraulikbehäkers (16) angeordnet ist.

7. Federungs- und Dämpfungseinrichtung nach einem der Ansprüche 1 bis 6,
**dadurch gekennzeichnet, dass** der Hydraulikbehälter (16) über eine Leitung (18) mit dem zweiten Arbeitsraum (12) des Federzylinders (2) verbunden und insbesondere parallel neben dem Federzylinder (2) angeordnet ist, und zwar bevorzugt so, dass sich das Dämpfungsmedium (DM) schwerkraftbedingt im unteren Bereich befindet.

## Claims

1. A suspension and shock-absorption means (1) for load-bearing and resilient wheel support and for damping suspension movements in a motor vehicle, consisting of at least one spring cylinder (2) with a piston (6) which is guided in relatively movable manner in a cylinder (4), which piston, for generating a load-bearing supporting spring force (F), acts against an elastically compressible spring medium (FM), the piston (6) having on one side a piston rod (8) which is guided outwards out of the cylinder (4) in peripherally sealed manner, and the piston (6) within the cylinder (4) separating two operating chambers (10, 12) from each other, namely a first operating chamber (10) arranged as a cylindrical space on the opposite side from the piston rod (8) and a second operating chamber (12) which surrounds the piston rod (8) in the manner of a hollow cylinder as an annular space, **characterised in that** a separate circuit of a hydraulic damping medium (DM) which is independent of the spring medium (FM) is provided for damping, by associating the cylindrical first operating chamber (10) with the spring medium (FM) and the hollow-cylindrical second operating chamber (12) with the hydraulic damping medium (DM), the second operating chamber (12) being filled with the hydraulic damping medium (DM) and being connected via a damping-valve arrangement (14) to a hydraulic vessel (16) in which the damping medium (DM) is under a given preload pressure, and the first operating chamber (10) being filled with the elastically compressible spring medium (FM) so that the piston (6) acts directly against the spring medium (FM).

2. A suspension and shock-absorption means according to Claim 1, **characterised in that** the preload pressure in the hydraulic vessel (16) lies in the range from 3 to 5 bar.

3. A suspension and shock-absorption means according to Claim 1 or 2, **characterised in that** the first operating chamber (10) is connected via a line (38) to an additional vessel (36) containing the elastically compressible spring medium (FM).

4. A suspension and shock-absorption means according to one of Claims 1 to 3, **characterised in that** the piston (6) has a cavity (34) for forming a minimum residual volume for the spring medium (FM).

5. A suspension and shock-absorption means according to one of Claims 1 to 4, **characterised in that** a gaseous and/or liquid medium is provided as compressible medium (FM).

6. A suspension and shock-absorption means according to one of Claims 1 to 5, **characterised in that** the damping-valve arrangement (14) is arranged in an inlet region of the hydraulic vessel (16).

7. A suspension and shock-absorption means according to one of Claims 1 to 6, **characterised in that** the hydraulic vessel (16) is connected via a line (18) to the second operating chamber (12) of the spring cylinder (2) and in particular is arranged parallel next to the spring cylinder (2), namely preferably such that the damping medium (DM) is located in the lower region due to gravity.

## Revendications

1. Dispositif de suspension et d'amortissement (1) pour former, pour une roue, un appui supportant les charges et réduisant les vibrations et pour amortir les mouvements de débattement dans un véhicule automobile, ledit dispositif étant formé par au moins un cylindre de suspension (2) avec un piston (6), qui est guidé selon un mouvement relatif dans un cylindre (4) et qui, pour générer une force de suspension des ressorts (F) supportant la charge, agit contre un milieu formant ressort (FM) élastiquement compressible, dans lequel ledit piston (6) comporte sur un côté une tige de piston (8) étanchée sur son pourtour et guidée vers l'extérieur du cylindre (4), et dans lequel ledit piston (6) sépare l'une de l'autre deux chambres de travail (10, 12) à l'intérieur du cylindre (4), à savoir une première chambre de travail (10), formant un espace cylindrique sur le côté opposé à la tige de piston (8) et séparée d'une deuxième chambre de travail (12) cylindrique creuse formant un espace annulaire entourant la tige de piston (8),
**caractérisé en ce que** pour l'amortissement, il est prévu un circuit de milieu amortisseur hydraulique (DM) séparé, indépendant du milieu formant ressort (FM), du fait que la première chambre de travail (10) cylindrique est associée au milieu formant ressort (FM) et la deuxième chambre de travail (12) cylindrique creuse est associée au milieu amortisseur hydraulique (DM), dans lequel la deuxième chambre de travail (12) est remplie du milieu amortisseur hydraulique (DM) et est reliée par l'intermédiaire d'un système de soupapes d'amortissement (14) à un réservoir hydraulique (16), dans lequel le milieu amortisseur hydraulique (DM) est soumis à une pression de précontrainte déterminée, et la première chambre de travail (10) étant remplie du milieu formant ressort (FM) élastiquement compressible, de telle sorte que le piston (6) agit directement contre le milieu formant ressort (FM).

2. Dispositif de suspension et d'amortissement selon la revendication 1, **caractérisé en ce que** la pression de précontrainte dans le réservoir hydraulique (16) se situe dans une plage de 3 à 5 bars.

3. Dispositif de suspension et d'amortissement selon la revendication 1 ou 2, **caractérisé en ce que** la première chambre de travail (10) est reliée via une conduite (38) à un réservoir supplémentaire (36) contenant le milieu formant ressort (FM) élastiquement compressible.

4. Dispositif de suspension et d'amortissement selon l'une quelconque des revendications 1 à 3, **caractérisé en ce que** le piston (6) comporte une cavité (34) pour former un volume résiduel minimum pour le milieu formant ressort (FM).

5. Dispositif de suspension et d'amortissement selon l'une quelconque des revendications 1 à 4, **caractérisé en ce que** le milieu formant ressort (FM) compressible est un milieu gazeux et/ou liquide.

6. Dispositif de suspension et d'amortissement selon l'une quelconque des revendications 1 à 5, **caractérisé en ce que** le système de soupapes d'amortissement (14) est disposé dans une zone d'entrée du réservoir hydraulique (16).

7. Dispositif de suspension et d'amortissement selon l'une quelconque des revendications 1 à 6, **caractérisé en ce que** le réservoir hydraulique (16) est relié via une conduite (18) à la deuxième chambre de travail (12) du cylindre de suspension (2) et est disposé, en particulier parallèlement, à côté du cylindre de suspension (2), à savoir de préférence de telle sorte que le milieu amortisseur hydraulique (DM), se situe dans la zone inférieure sous l'effet de la force de gravité.
